Europäisches Patentamt

(19) European Patent Office

Office européen des brevets

(11) Numéro de publication: **0 274 295**
**B1**

(12) **FASCICULE DE BREVET EUROPEEN**

(45) Date de publication du fascicule du brevet: **23.01.91**

(21) Numéro de dépôt: **87402676.8**

(22) Date de dépôt: **26.11.87**

(51) Int. Cl.⁵: **B 32 B 17/10, C 03 C 27/12, B 65 H 9/00, B 65 H 9/16**

(54) **Procédé et dispositif d'assemblage automatique de vitrages feuilletés.**

(30) Priorité: **02.12.86 FR 8616792**

(43) Date de publication de la demande:
**13.07.88 Bulletin 88/28**

(45) Mention de la délivrance du brevet:
**23.01.91 Bulletin 91/04**

(84) Etats contractants désignés:
**AT BE CH DE ES FR GB IT LI LU NL SE**

(56) Documents cités:
**DE-A-2 820 103**
**FR-A-2 392 910**
**US-A-4 368 087**

(73) Titulaire: **SAINT-GOBAIN VITRAGE INTERNATIONAL**
**18, avenue d'Alsace**
**F-92400 Courbevoie (FR)**

(72) Inventeur: **Art, André**
**Rue Robert Poulot 27 A**
**B-5800 Lonzee (BE)**
Inventeur: **Jandrain, Jean-Claude**
**Rue de Quinçay 13**
**B-5198 Warnant Anhee (BE)**
Inventeur: **Lecourt, Jean**
**Avenue du Maréchal Ney 28**
**B-1410 Waterloo (BE)**
Inventeur: **Legros, Désiré**
**Chemin de Velaine 19**
**B-5790 Jemeppe Sur Sambre (BE)**

(74) Mandataire: **Muller, René et al**
**SAINT-GOBAIN RECHERCHE 39, quai Lucien Lefranc**
**F-93304 Aubervilliers (FR)**

Courier Press, Leamington Spa, England.

EP 0 274 295 B1

## Description

La présente invention concerne la fabrication automatique de structures stratifiées telles des vitrages feuilletés.

Les vitrages feuilletés utilisés dans le bâtiment et dans les véhicules de transport, notamment en tant que pare-brise, sont formés généralement d'au moins une feuille rigide telle une feuille de verre ou une feuille de matière plastique comme le polycarbonate ou le polyméthacrylate de méthyle, et d'au moins une feuille en matière plastique souple, en polyvinylbutyral ou en polyuréthane par exemple, utilisée généralement comme feuille intercalaire dans le cas d'une structure comprenant deux feuilles rigides.

Pour fabriquer ces vitrages feuilletés, on découpe la ou les feuilles de matière plastique souple au préalable au format exact du vitrage ou généralement à un format géométrique légèrement plus grand que l'on désigne par primitif, on les empile avec les autres éléments constitutifs du vitrage feuilleté et on assemble tous ces éléments à l'aide d'une opération d'assemblage proprement dite généralement effectuée en deux étapes: une première étape consistant, par exemple, en une opération de calandrage fournissant un assemblage préliminaire, suivie d'une seconde étape consistant en un cycle d'autoclave mettant en oeuvre la température et la pression fournissant l'assemblage définitif.

L'invention concerne plus particulièrement l'empilage de la feuille souple avec les autres éléments constitutifs du vitrage feuilleté, et les opérations qui lui sont liées, notamment son centrage préalable dans une position intermédiaire voisine du poste d'empilage, son transfert au poste d'empilage et sa dépose en position correcte dans l'empilage.

Un des problèmes rencontrés dans l'automatisation des différentes opérations utilisées pour la fabrication des vitrages feuilletés est le positionnement correct de la feuille de matière plastique souple dans l'empilage pour former le vitrage.

Une solution déjà proposée consiste à disposer les feuilles de matière plastique souple les unes sur les autres de façon précise à un emplacement fixe et déterminé appelé poste de stockage. Dans ce cas on saisit la feuille en cet emplacement et on la transfère par une course de longueur constante jusqu'au poste d'empilage du vitrage feuilleté. Malheureusement, les feuilles de matière plastique en polyvinylbutyral ou en polyuréthane présentent à la température ambiante des ateliers d'assemblage une certaine prétension à coller entre elles et il est courant qu'au moment de la préhension de la feuille supérieure de la pile on saisisse du même coup temporairement la feuille sous-jacente qui lui est plus ou moins collée ce qui peut décaler cette deuxième feuille de sa position correcte de préhension. Le décalage de la feuille qui en résulte est ensuite transféré au poste d'empilage, et finalement, l'empilement ne sera pas correct.

L'invention propose un procédé d'assemblage automatique du vitrage feuilleté dans lequel on règle la position de chacune des feuilles souples, séparément, dans une position intermédiaire, ce qui, notamment, élimine tout risque le décalage d'une feuille à l'autre.

L'invention, donc, concerne un procédé du type correspondant à la solution déjà évaporée et selon la préambule de la revendication 1, se caractérise en ce que la feuille souple est au préalable positionnée par gravité dans au moins une des deux coordonnées du plan horizontal, déterminant la position de préhension.

Selon une caractéristique préférée du procédé, la feuille souple en forme de primitif trapézoïdal est positionnée dans la coordonnée choisie, par appui de la grande base du primitif contre une règle longitudinale disposée elle-même dans une position choisie au préalable.

Le positionnement de la feuille souple selon l'autre coordonnée du plan permettant son centrage, peut être réalisé par un déplacement longitudinal et passage devant un détecteur.

Pour faciliter les opérations de positionnement, c'est-à-dire de focalisation, dans la position désirée intermédiaire, avantageusement la feuille de matière plastique est supportée par un coussin d'air au cours de l'opération de positionnement par gravité.

Le positionnement individuel, c'est-à-dire la focalisation, de chacune des feuilles de matière plastique souple dans une position intermédiaire déterminée présente plusieurs avantages.

Ainsi, il ne nécessite pas un empilage précis des primitifs à un poste de préhension, et il évite tout problème de collage des feuilles entre elles.

En outre, la focalisation individuelle autorise des différences d'orientation des feuilles amenées par le convoyeur d'alimentation.

Cette focalisation individuelle peut encore s'appliquer à un primitif obtenu directement après sa découpe à partir d'un rouleau, sans stockage intermédiaire des primitifs. Il s'applique à tous les types de polyvinylbutyral plus ou moins rigides.

L'invention concerne aussi un dispositif pour la mise en oeuvre du procédé. Le dispositif pour l'assemblage automatique selon l'invention comprend des moyens de centrage pour les feuilles rigides telles les feuilles de verre, ces moyens étant disposés au poste d'empilage du vitrage, des moyens de centrage ou focalisation dans une position intermédiaire de la feuille de matière plastique souple, ces moyens comprenant une table basculante munie d'une règle disposée selon une des deux coordonnées déterminant la position intermédiaire, parallèlement à l'axe de basculement de la table, des moyens pour le transfert de la feuille de matière plastique souple de sa position de centrage intermédiaire au poste d'empilage du vitrage, un convoyeur amenant les feuilles rigides au poste d'empilage, un convoyeur annexe amenant les feuilles souples à la table pour le centrage intermédiaire.

D'autres caractéristiques et avantages apparaitront dans la description suivante d'un dispositif selon l'invention.

La figure 1 représente schématiquement la ligne de transfert du primitif entre le convoyeur d'approvisionnement et le poste d'empilage avec passage sur une table de centrage pour le centrage du primitif dans une position intermédiaire.

Les figures 2 et 3 représentent schématiquement les étapes du centrage du primitif dans la position intermédiaire.

La figure 4 représente une vue de dessus d'une table de centrage.

La figure 5 est une vue en élévation de la table de centrage de la figure 4.

La figure 6 est une vue de côté de la table représentée sur la figure 5.

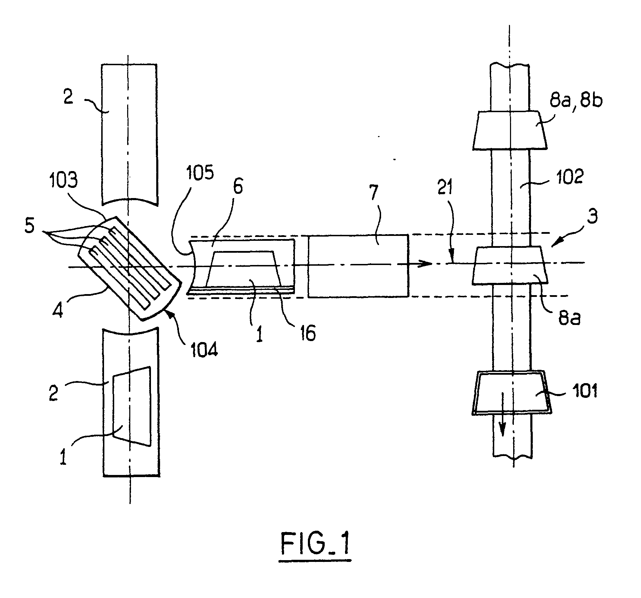

La figure 1 représente la ligne de transfert de la feuille de matière plastique souple 1 entre un double convoyeur d'approvisionnement 2 et le poste d'empilage 3 des éléments constitutifs du vitrage feuilleté à fabriquer 101, situé dans la ligne du convoyeur d'amenée 102 des feuilles de verre 8a, 8b, ligne dite d'assemblage, perpendiculaire à la ligne de transfert du primitif. Le convoyeur d'approvisionnement 2 perpendiculaire à la ligne de transfert amène la feuille souple qui, là, est en forme le primitif 1 trapézoïdal orienté après la découpe avec ses bases disposées sensiblement parallèles à l'axe du convoyeur 2, à une table de pivotement 4 qui fait pivoter le primitif de 90° dans le sens désiré selon l'orientation initiale du primitif sur le convoyeur 2, de façon à ce que la grande base du trapèze se présente toujours du même côté, par rapport à la table de centrage 6. La table de pivotement est équipée de moyens d'entrainement 5, par exemple des bandes de transport qui transportent le primitif du convoyeur d'approvisionnement 2 à la table de centrage ou focalisation 6. Le mouvement de transfert de la table de pivotement 4 à la table de centrage 6 est facilité par un coussin d'air dont est équipé la table de centrage 6 comme expliqué plus en détail par la suite. Les côtés 103, 104 de la table de pivotement sont découpés en arcs de cercle convexes alors que le côté 105 de la table de centrage lui faisant face est découpé suivant un arc de cercle concave, ceci afin de faciliter les manoeuvres de la table de pivotement 4 sans avoir à déplacer pour autant la table de centrage 6.

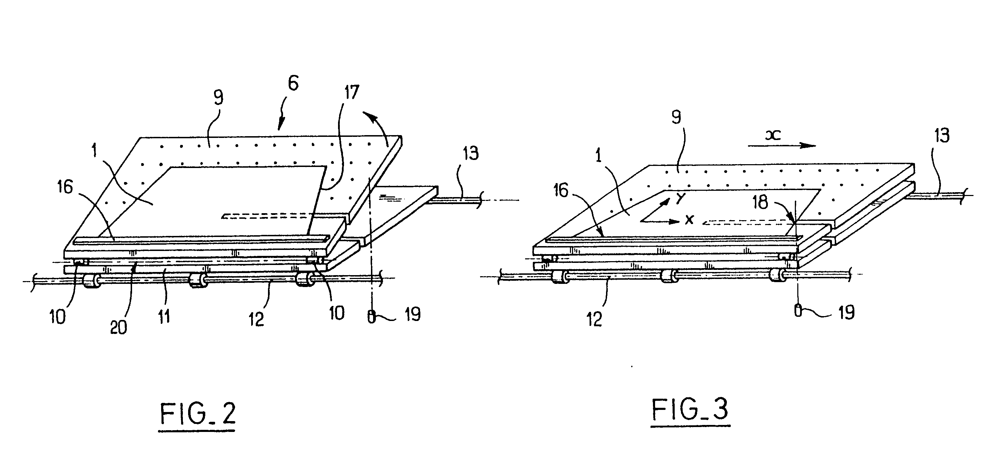

Arrivé sur la table de centrage, le primitif 1 est centré selon les deux coordonnées de centrage, déterminées par rapport à deux axes perpendiculaires X, Y comme représenté sur les figures 2 et 3. Après le centrage dans la position intermédiaire, le primitif est saisi par un préhenseur de transfert 7 qui le transfère au poste d'empilage 3 par un déplacement de course constante, où il est déposé sur la feuille de verre inférieure 8a en attente à ce poste.

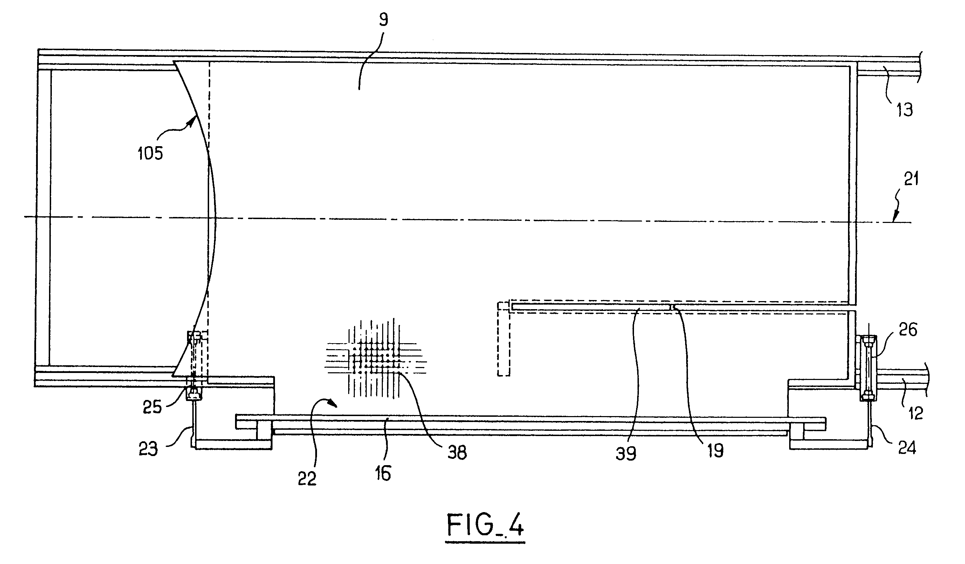

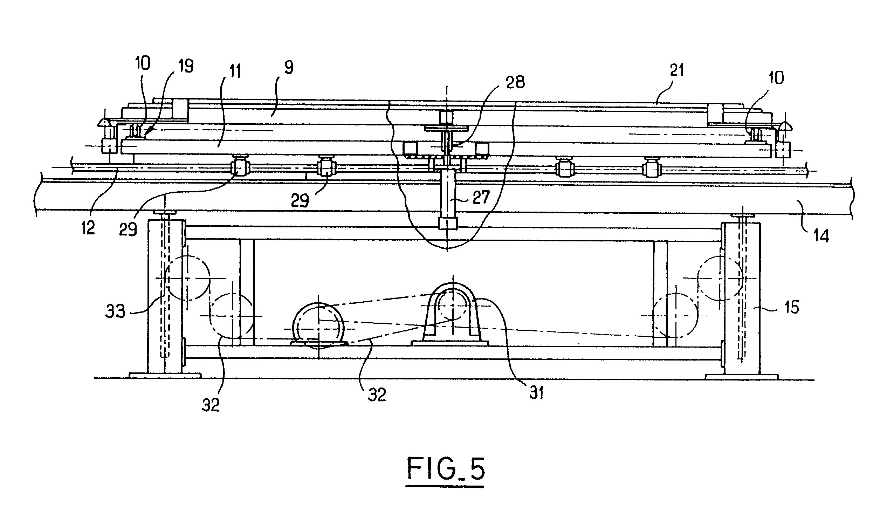

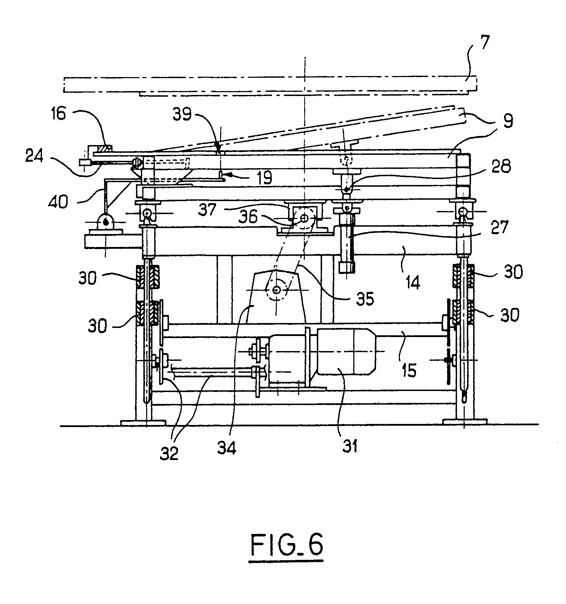

Les figures 2 et 3 représentent schématiquement le centrage du primitif sur la table de centrage 6 selon les deux coordonnées de la position intermédiaire déterminée par rapport aux axes X et Y. La table de centrage 6 comprend un plateau supérieur basculant 9 autour de charnières 10 disposées longitudinalement sur un plateau inférieur 11 qui coulisse sur des rails 12, 13 portés comme représentés sur les figures 4, 5, 6, par une structure élévatrice 14 elle-même coulissante verticalement sur un bâti 15. Le positionnement selon la coordonnée Y est réalisé par un basculement du plateau supérieur 9 qui provoque la mise en appui par gravité de la base du primitif 1 contre une règle 16 disposée sur la plateau basculant. Le positionnement selon la coordonnée X est réalisé par un déplacement schématisé par la flèche x des deux plateaux 9, 11 le long des rails 12, 13 jusqu'à ce que le bord du côté incliné 17 du trapèze intercepte l'axe 18 d'un détecteur 19, par exemple un détecteur optique tel une cellule disposée sous le plateau 11.

Les figures 4, 5 et 6 représentent une table de centrage 6 du dispositif selon l'invention. Comme décrit précédemment, la table 6 comprend un plateau supérieur basculant 9 monté pivotant sur des charnières 10 fixées le long d'un côté longitudinal d'un plateau inférieur 11, de façon à ce que le plateau supérieur 9 puisse basculer autour d'un axe horizontal 20 parallèle à l'axe 21 de la ligne de transfert.

Une règle 16 parallèle à l'axe 21 prend appui sur la surface 22 du plateau basculant 9. Les deux extrémités de la règle sont fixées aux tiges 23, 24 de deux vérins horizontaux 25, 26 portés par la structure élévatrice 14, perpendiculaires à l'axe de la table 6 qui se confond avec l'axe de la ligne de transfert 21. Ces deux vérins 25, 26 sont susceptibles d'écarter la règle 16 du plateau 9 par rapport à l'axe de la table afin de faciliter la préhension ultérieure du primitif 1 une fois positionné, par le préhenseur de transfert 7.

La position de la règle sur le plateau peut le cas échéant être modifiée pour d'autres types de primitifs. Le mouvement de basculement du plateau basculant est procuré par un vérin 27 à attache oscillante 28, porté par le plateau inférieur 11. Ce plateau inférieur 11 est monté coulissant par l'intermédiaire de paliers 29 sur les rails 12, 13 supportés par la structure élévatrice 14, elle-même montée coulissante verticalement, par l'intermédiaire de douilles à billes 30, sur le bâti 15. La position haute de la structure élévatrice 14 supportant la table 6 est utilisée pour la préhension du primitif 1 à partir de la table 6 par le préhenseur de transfert 7, alors que la position basse est utilisée pour le centrage du primitif.

Le mouvement de montée-baisse de la structure élévatrice 14 est commandé par l'action d'un moteur électrique 31 et d'un système de transmission 32 comprenant chaines, roues dentées et crémaillères verticales 33, solidaires de la structure élévatrice 14. Le mouvement de la table 6 selon un déplacement longitudinal le long des rails 12, 13 est commandé par un moteur électrique 34 et un système de transmission 35 qui actionne la rotation d'une vis 36, ce qui provoque l'entrainement d'un écrou 37 solidaire de la table 6.

Le plateau basculant 9 est percé d'orifices 38 reliés à des moyens (non représentés) qui peuvent alternativement créer un coussin d'air par soufflage, ou une aspiration, selon les différentes phases du centrage comme expliqué par la suite. Le plateau basculant 9 de la table 6 présente une fente 39 qui s'étend longitudinalement sur approximativement la moitié de la longueur de la table. Un détecteur optique 18 monté par l'intermédiaire d'un bras 40 sur le bâti 15 sous la table, dans le plan vertical de la fente 39 peut ainsi repérer le passage du côté incliné 17 du primitif afin de positionner celui-ci selon la deuxième coordonnée du centrage.

Le côté 105 de la table de centrage 6 faisant face à la table de pivotement est découpé suivant un arc de cercle concave correspondant au profil des côtés de la table de pivotement, ce qui permet le pivotement de la table de pivotement sans avoir à déplacer pour cela la table de centrage.

Le dispositif fonctionne de la manière suivante.

Un primitif 1, dans l'exemple de forme trapézoïdale, est amené par le convoyeur d'approvisionnement 2 à la table de pivotement 4. L'orientation du primitif sur le convoyeur est telle que les deux bases du trapèze sont sensiblement parallèles à l'axe du convoyeur 2. Dès qu'il est sur la table de pivotement 4, celle-ci pivote dans le sens permettant de présenter la grande base du trapèze face à la règle 16 lorsque le primitif arrivera sur la table de centrage 6. Des courroies de transport 5 qui équipent la surface de la table de pivotement, entrainent le primitif sur la table de centrage 6. Le mouvement de passage de la table de pivotement 4 à la table de centrage 6 est favorisé par le coussin d'air créé par soufflage à travers les orifices 38 dont est pourvu le plateau supérieur 9 de la table 6. Lorsque le primitif est sur la table de centrage 6, le plateau supérieur est alors basculé par l'action du vérin 27, autour des charnières 10. Le primitif, par gravité, se place avec appui de sa grande base contre la règle 16 disposée initialement sur le plateau 9 dans la position désirée, parallèle à l'axe de la ligne de transfert et dans la coordonnée désirée par rapport à l'axe Y.

Le soufflage d'air créant le coussin d'air est interrompu et il est remplacé par une aspiration qui s'exerce par les mêmes orifices 38 du plateau basculant, ce qui maintient le primitif sur le plateau dans la coordonnée de centrage par rapport à l'axe Y. Le plateau revient à la position horizontale et l'ensemble est entrainé par déplacement de la table 6 le long des rails 12, 13 selon l'axe de la ligne de transfert jusqu'au passage du côté incliné 17 du primitif à l'aplomb de l'axe 18 du détecteur optique 19 dont la position correspond à la coordonnée désirée par rapport à l'axe X.

Le primitif est alors dans la position de centrage intermédiaire dite encore position de focalisation.

La règle 16 est ensuite dégagée de la surface de la table 6, vers l'extérieur, par l'action des deux vérins 25, 26.

La table 6 est alors soulevée par l'action du moteur électrique 31 et du système de transmission 32 avec roues dentées et crémaillères, alors que le préhenseur de transfert 7 arrive au dessus d'elle. L'aspiration du plateau 9 de la table 6 est supprimée et elle est à nouveau remplacée par un soufflage d'air alors que le préhenseur de transfert exerce lui une aspiration. Par aspiration et soufflage, le primitif 1 passe du plateau supérieur 9 de la table 6 au préhenseur de transfert 7.

La face inférieure du préhenseur de transfert 7 est avantageusement divisée en plusieurs sections, par exemple cinq sections, contrôlables et réglables séparément pour l'aspiration et le soufflage de manière à faciliter notamment la dépose ultérieure du primitif.

Le préhenseur de transfert 7 entraine ensuite le primitif 1 par un déplacement de course constante jusqu'au poste d'empilage où est disposée en attente, horizontalement, la feuille de verre inférieure 8a, la feuille de verre 8b étant maintenu en dehors de l'espace parcouru par le préhenseur de transfert 7. L'aspiration du préhenseur de transfert 7 est ensuite supprimée et le primitif tombe alors sur la feuille de verre 8a dans la position exacte d'empilage. Pour aider à la dépose du primitif 1, le préhenseur de transfert exerce un soufflage, avantageusement localisé au centre du primitif 1. Afin d'améliorer encore la dépose du primitif sur la feuille de verre, il peut être prévu des doigts éclipsables non représentés, disposés en des emplacements déterminés sur la face inférieure du préhenseur de transfert 7, par exemple disposés sur l'axe de symétrie de ladite face, qui maintiennent temporairement le primitif une fois déposé sur la feuille de verre, et qui en position de repos sont éclipsés dans le préhenseur de transfert 7.

Après dégagement du préhenseur de transfert 7, la feuille de verre supérieure 8b est déposée sur le primitif afin de compléter l'empilage pour former le vitrage feuilleté 101 qui peut ensuite être entrainé au poste suivant.

Au cours de la dépose du primitif dans l'empilage, le primitif suivant est amené par le convoyeur, puis centré sur la table de centrage 6.

**Revendications**

1. Procédé d'assemblage automatique de vitrages feuilletés formés d'au moins une feuille rigide en verre ou en matière plastique et d'au moins une feuille de matière plastique souple (1), dans lequel on empile les feuilles constituant le vitrage feuilleté (101) à un poste d'empilage et on assemble le vitrage feuilleté de façon définitive par un pressage et/ou un chauffage, la feuille rigide étant disposée au poste d'empilage selon les coordonnées désirées et la feuille souple étant amenée à ce poste à partir d'une position de préhension horizontale et fixée par un transfert de course déterminé, caractérisé en ce que la feuille souple est au préalable positionnée par gravité selon au moins une des deux coordonnées du plan horizontal, déterminant la position de préhension.

2. Procédé selon la revendication 1, caractérisé en ce que la feuille souple en forme de primitif trapézoïdal est positionnée dans la coordonnée choisie par appui de la grande base du primitif contre une règle longitudinale disposée elle-même dans une position choisie au préalable.

3. Procédé selon une des revendications 1 ou 2, caractérisé en ce que la feuille souple est positionnée selon la seconde de ses coordonnées horizontales par passage devant un détecteur.

4. Procédé selon une des revendications 1 ou 3, caractérisé en ce que la feuille souple est supportée par un coussin d'air au cours du positionnement par gravité.

5. Dispositif d'assemblage automatique de vitrages feuilletés (101) formés d'au moins une feuille rigide en verre ou en matière plastique et d'au moins une feuille de matière plastique souple (1), notamment en forme de primitif trapézoïdal, caractérisé en ce qu'il comprend des moyens de centrage des feuilles rigides (8a, 8b) disposés au poste d'empilage du vitrage, des moyens de centrage dans une position intermédiaire de la feuille de matière plastique souple (1), ces moyens comprenant une table basculante (6) munie d'une règle (16) disposée selon une des deux coordonnées déterminant la position intermédiaire, parallèlement à l'axe de basculement de la table basculante (6), des moyens pour le transfert (7) de la feuille de matière plastique souple (1) de sa position de centrage intermédiaire au poste d'empilage du vitrage, un convoyeur (102) amenant les feuilles rigides au poste d'empilage, un convoyeur annexe (2) amenant les feuilles souples à la table pour le centrage intermédiaire.

6. Dispositif selon la revendication 5, caractérisé en ce que la table basculante (6) comprend un plateau supérieur (9) pivotant autour de charnières fixées sur un bord longitudinal d'un plateau inférieur (11) mobile selon l'axe de transfert.

7. Dispositif selon une des revendications 5 ou 6, caractérisé en ce que la plateau pivotant (9) est pourvu d'orifices (38) reliés à des moyens permettant un soufflage ou une aspiration.

8. Dispositif selon une des revendications 5 à 7, caractérisé en ce que la table basculante (6) est mobile verticalement.

9. Dispositif selon une des revendications 5 à 8, caractérisé en ce que les moyens pour le transfert sont un préhenseur de transfert (7) dont la face inférieure est munie d'orifices reliés à des moyens commandant une aspiration ou un soufflage d'air.

10. Dispositif selon la revendication 9, caractérisé en ce que la face inférieure du préhenseur de transfert est divisée en sections réglables indépendamment pour l'aspiration et le soufflage.

11. Dispositif selon la revendication 9 ou 10, caractérisé en ce que le préhenseur de transfert comprend sur sa face inférieure des doigts éclipsables.

**Patentansprüche**

1. Verfahren zum automatischen Zusammenlegen von Verbundgläsern, die aus mindestens einer starren Scheibe aus Glas oder Kunststoff und mindestens einer Folie (1) aus nachgiebigem Kunststoff gebildet sind, bei dem man die das Verbundglas (101) bildenden Schichten an einer Zusammenlegestation aufeinanderschichtet und das Verbundglas durch Druck und/oder Erhitzen endgültig zusammenfügt, wobei die starre Scheibe an der Zusammenlegestation gemäß den gewünschten Koordinaten angeordnet wird und die nachgiebige Folie von einer horizontalen und festgelegten Greifposition über eine vorbestimmte Bahn zu dieser Station geführt wird, dadurch gekennzeichnet, daß die nachgiebige Folie vorher in mindestens einer der beiden Koordinaten der horizontalen Ebene, die die Greifposition bestimmt, durch Schwerkraft angeordnet wird.

2. Verfahren nach Anspruch 1, dadurch gekennzeichnet, daß die nachgiebige Folie als trapezförmiger Teil in der ausgewählten Koordinate durch Anlegen der großen Basis des Trapezteils an einer Längsschiene angeordnet wird, die selbst zuvor in einer ausgewählten Position angeordnet ist.

3. Verfahren nach einem der Ansprüche 1 oder 2, dadurch gekennzeichnet, daß die nachgiebige Folie durch Vorbeiführen vor einem Detektor gemäß der zweiten ihrer horizontalen Koordinaten angeordnet wird.

4. Verfahren nach einem der Ansprüche 1 oder 3, dadurch gekennzeichnet, daß die nachgiebige Folie während der Positionierung durch Schwerkraft von einem Luftkissen getragen wird.

5. Vorrichtung zum automatischen Zusammenlegen von Verbundgläsern (101), die aus mindestens einer starren Scheibe aus Glas oder Kunststoff und mindestens einer nachgiebigen Folie (1) aus Kunststoff, insbesondere als trapezförmiger Teil gebildet sind, dadurch gekennzeichnet, daß die Vorrichtung Einrichtungen zum Zentrieren der starren Scheiben (8a, 8b), die an der Zusammenlegestation des Glases angeordnet sind, Einrichtungen zum Zentrieren der Folie (1) aus nachgiebigem Kunststoff in einer Zwischenposition, welche einen Kipptisch (6) umfassen, der mit einer Schiene (16) versehen ist, die gemäß einer der Schiene (16) versehen ist, die gemäß einer der zwei Koordinaten parallel zur Kippachse des Kipptisches (6) angeornet ist, die die Zwischenposition bestimmen, Einrichtungen (7) zum Transport der Folie (1) aus nachgiebigem Kunststoff von ihrer Zwischenposition zur Zusammenlegestation des Glases, eine Fördereinrichtung (102) zum Überführen der starren Folien zur Zusammenlegestation und eine zusätzliche Fördereinrichtung (2) zum Zuführen der nachgiebigen Folien zum Tisch zur Zwischenzentrierung umfaßt.

6. Vorrichtung nach Anspruch 5, dadurch gekennzeichnet, daß der Kipptisch (6) eine obere Platte (9) umfaßt, die um Scharniere drehbar ist, die an einer Längskante einer unteren Platte (11) befestigt sind, die längs der Transportachse beweglich ist.

7. Vorrichtung nach einem der Ansprüche 5 oder 6, dadurch gekennzeichnet, daß die drehbare Platte (9) mit Öffnungen (38) versehen ist, die mit einer Einrichtung zum Blasen oder Ansaugen verbunden sind.

8. Vorrichtung nach eienm der Ansprüche 5 bis 7, dadurch gekennzeichnet, daß der Kipptisch (6) vertikal bewegbar ist.

9. Vorrichtung nach einem der Ansprüche 5 bis 8, dadurch gekennzeichnet, daß die Transporteinrichtungen ein Transportgreifer (7) ist, dessen untere Fläche mit Öffnungen versehen ist, die mit einer Einrichtung zum Ansaugen oder Blasen von Luft verbunden sind.

10. Vorrichtung nach Anspruch 9, dadurch gekennzeichnet, daß die untere Fläche des Transportgreifers in Abschnitte unterteilt ist, die unabhängig hinsichtlich des Ansaugens oder des Blasens regelbar sind.

11. Vorrichtung nach einem der Ansprüche 9 oder 10, dadurch gekennzeichnet, daß der Transportgreifer auf seiner unteren Fläche einziehbare Finger umfaßt.

**Claims**

1. Process for the automatic assembly of laminated glass plates formed from at least one rigid glass or plastics material sheet and at least one flexible plastics material sheet (1), in which the sheets constituting the laminated glass plate (101) are stacked at a stacking station and the laminated glass plate is definitively assembled by a pressing and/or a heating operation, the rigid sheet being located at the stacking station in accordance with the desired coordinates and the flexible sheet being brought to said station from a horizontal gripping position and fixed by a predetermined travel transport, characterized in that the flexible sheet is positioned beforehand by gravity according to at least one of the two coordinates of the horizontal plane determining the gripping position.

2. Process according to claim 1, characterized in that the flexible sheet in the form of a trapezoidal blank is positioned in the chosen coordinate by engaging the large base of the blank against a longitudinal guide bar located at a position chosen beforehand.

3. Process according to one of the claims 1 or 2, characterized in that the flexible sheet is positioned according to the second of its horizontal coordinates by passing in front of a detector.

4. Process according to one of the claims 1 or 3, characterized in that the flexible sheet is supported by an air cushion during the positioning by gravity.

5. Apparatus for the automatic assembly of laminated glass plates (101) formed from at least one rigid glass or plastics material sheet and at least one flexible plastics material sheet (1), more particularly in the form of a trapezoidal blank, characterized in that it comprises means for centering the rigid sheets (8a, 8b) located at the glass plate stacking station, means for centering in an intermediate position of the flexible plastics material sheet (1), said means incorporating a tilting table (6) provided with a guide bar (16) positioned in accordance with one of the two coordinates determining the intermediate position and parallel to the tilting axis of the tilting table (6), means for the transfer (7) of the flexible plastics material sheet (1) from its intermediate centering position to the glass plate stacking station, a conveyor (102) supplying the rigid sheets to the stacking station and an auxiliary conveyor (2) supplying the flexible sheets to the table for the intermediate centering.

6. Apparatus according to claim 5, characterized in that the tilting table (6) comprises an upper plate (9) pivoting about joints fixed to a longitudinal edge of a lower plate (11) moving along the transfer axis.

7. Apparatus according to one of the claims 5 or 6, characterized in that the pivoting plate (9) is provided with orifices (38) connected to means permitting blowing or suction.

8. Apparatus according to one of the claims 5 to 7, characterized in that the tilting table (6) is vertically movable.

9. Apparatus according to one of the claims 5 to 8, characterized in that the transfer means are constituted by a transfer gripper (7), whose lower face is provided with orifices connected to means controlling an air blowing or suction.

10. Apparatus according to claim 9, characterized in that the lower face of the transfer gripper is subdivided in to independently regulatable sections for suction and blowing.

11. Apparatus according to claims 9 or 10, characterized in that the transfer gripper has retractable fingers on its lower face.

FIG.1

FIG_3

FIG_2

FIG_4

EP 0 274 295 B1

FIG.5

EP 0 274 295 B1

FIG.6